# EUROPEAN PATENT SPECIFICATION

(11) **EP 2 381 032 B1**
(45) Date of publication and mention of the grant of the patent: **15.07.2015**
(21) Application number: 09851567.9
(22) Date of filing: 11.12.2009
(51) Int. Cl.: D06M 17/00, D06M 23/10, D06M 13/348, D06M 13/224, D06M 13/236, A01N 25/34, A01N 53/00, D06M 16/00

(54) **INSECT PROOF FABRIC AND PRODUCING METHOD THEREOF**
INSEKTENRESISTENTER STOFF UND HERSTELLUNGSVERFAHREN DAFÜR
TISSU RÉSISTANT AUX INSECTES ET SON PROCÉDÉ DE PRODUCTION

(30) Priority: 24.11.2009 CN 200910199304
(43) Date of publication of application: 26.10.2011
(73) Proprietor: Institute Of Microbiology And Epidemiology, Academy Of Military Medical Sciences, Chinese Pla, Fengtai District Beijing 100071 (CN); Shanghai Gongtai Textile Products Co., Ltd., Shanghai 200093 (CN)
(72) Inventor: ZHAO, Tongyan, Beijing 100071 (CN); DONG, Yande, Beijing 100071 (CN); CAO, Gongping, Shanghai 200082 (CN)
(74) Representative: EP&C
(86) International application number: PCT/CN2009/001431
(87) International publication number: WO 2011/063554

(56) References cited:
- CN-A- 1 261 846
- CN-A- 1 473 988
- CN-A- 1 807 751
- CN-Y- 2 540 435
- CN-Y- 2 799 638
- JP-A- 6 346 373
- JP-A- 2006 152 517
- US-A- 3 385 652
- US-A- 4 502 861
- US-A1- 2007 157 395
- US-A1- 2008 153 372

## Description

### Technical Field

The present invention relates to fabric and methods for preparing the same, especially to the insect repellant fabric and methods for preparing the same.

### Background of the Invention

Blood sucking insects not only harass persons by biting, but also spread the plague, dengue fever, malaria and other diseases. In outlying regions in China such as Hainan, Yunnan, Xinjiang and Inner Mongolia, the insects around persons such as mosquitoes, ceratopogonidae, simuliidae, fleas, etc. are at a density of up to hundreds of insects per cubic meter during their activity peak period in summer. If people wear ordinary summer clothing, some blood sucking insects can penetrate the clothing to bite, while if the clothing is too thick, it will be unbearable at the high temperature due to the poor air permeability. Therefore, dressing seriously interferes in the normal outdoor activities in summer, e.g. army training, patrolling and other military activities, forestry and farming works.

The specification of Chinese utility model No. CN87203525Y discloses a suit preventing both heat stroke and mosquito, for the lining layer and the outshell layer thereof, dacron, acrylic fibres mosquito net or other net yarns having porosity are used as the main materials and nylon taffeta is used as the minor material, and there is frame-type flexible upholder such as sponge stripes between the lining layer and the outshell layer to prevent a mosquito from penetrating the suit to bite. However, due to the uneven distribution of the flexible upholders and thus the uneven distribution of the spaces between the lining layer and the outshell layer, when persons who wear the suit sit or lie down, the clothing will be folded, therefore, the insect can still easily bite the person through the regions where the two layers contact each other.

The specification of Chinese utility model No. CN2799638Y discloses a fabric preventing insects' biting, which is composed of a lining layer, an outshell layer and at least one lapping layer situated between the former two layers, wherein, the lapping layer is made of fibers, which are monofilaments or multifilaments supporting between the lining layer and the outshell layer. The fabric preventing insects' biting has a meshwork multilayer stitch which brings out an air permeability and insect-prevention function, but in case of tiny insects such as biting midges, ceratopogonidae, simuliidae, sand flies, etc, the diameter of holes in the fabric must be decreased, which will result in poor air permeability. In addition, in the area where the activities of blood sucking insects are frequent, such as Altay of Xinjiang municipality, the density of the insects is up to 1700 per cubic meter in July and August, it is unbearable as long as only 1% of tiny insects get through the holes or seams between cap and coat, coat and pants, or pants and footwear to sting. Therefore, fabric only having special stitch are not enough to prevent insects.

Thus, new research interest focuses on adding insect repellant in fabric to produce an insect repellant fabric.

From Technical Manual of Hygienic Insecticide Formulations in 2000 (Union Books and Serials Number: ISBN7-5025-2987-X/TQ.1305), it is known that the insect repellant polyethylene fibers of SUMITOMO Chemical Company Limited, Japan, are produced by adding permethrin into a spinning solution of high density polyethylene fibers during spinning, wherein, the amount of permethrin is 2% of high density polyethylene, and in use, permethrin will be released to the surface of the fibers to bring out an insect repellant effect. However, pyrethroids being impurities for synthetic fibers including polyethylene fibers etc. will deteriorate the spinnability of the fibers, therefore only insect repellant fibers having a diameter of more than 0.15mm can be spun. In addition, in common spinning processes for insect repellant fibers, the spinning temperature is much higher than the decomposition temperatures of deltamethrin and cyhalothrin, therefore a great amount thereof will be decomposed.

In the prior art, coating process of applying insect repellant to the surface of fabric is also developed. However, the conventional coating process cannot be used to process one side of the double-layer meshwork stitch alone or the middle lapping layer thereof. Moreover, the fabric having insect repellant on their surfaces may cause allergic reactions when contacting with skin of persons.

US 3385652 discloses that certain dyestuffs can be dissolved in alcohol-ethers and the solution obtained can be dispersed into an aqueous dyebath wherein polyolefins can be dyed. This US patent document teaches that the aqueous dyebath comprises in addition a dispersing agent.

The publication No. CN1807751A for Chinese Patent application discloses a method for preparing an insect repellant fabric by applying pyrethroids to synthetic fibers through dyeing process, wherein it is tried to make insect repellant to be contained in the fibers by dyeing and printing. In the method, xylene is used as a main carrier to help pyrethroids to be dyed and printed onto synthetic fibers. But this method is not suitable for synthetic fibers having small diameters, such as polyethylene and polypropylene fibers, because xylene will dissolve the synthetic fibers such as polyethylene and polypropylene fibers at the temperature of 70°C or more and thus denude them during dyeing and printing. Therefore, by using existing methods, it is impossible to prepare synthetic fibers, such as polyethylene and polypropylene fibers having small diameters and containing deltamethrin pesticides.

### Disclosure of the Invention

One object of the present invention is to provide a method for preparing an insect repellant fabric.

Another object of the present invention is to provide another method for preparing an insect repellant fabric.

Still another object of the present invention is to provide insect repellant fabric prepared by using any one of the above methods to effectively prevent insects biting.

In order to achieve the above-mentioned objects, the present invention can be carried out by following technical solutions.

A method for preparing an insect repellant fabric is characterized in that the method comprises the following steps:
(1) fabric making: making natural fibers to be a lining layer, making synthetic fiber multifilaments to be an outshell layer, and making polypropylene or polyethylene fiber monofilaments to be a lapping layer, wherein the lapping layer is situated between the lining layer and the outshell layer, and both the lining layer and the outshell layer are made as a meshwork stitch with a density of 3.88 to 77.7 meshes per square centimeter (25 to 500 meshes per square inch);
(2) exhaust dyeing: dipping the prepared fabric into an exhaust dyeing solution and being dyed for 10 to 120 minutes at a temperature of 60 to 105°C;
(3) water rinsing and centrifuge drying;
(4) setting.

Another method for preparing an insect repellant fabric is characterized in that the method comprises the following steps:
(1) exhaust dyeing: dipping synthetic fiber multifilaments, polypropylene or polyethylene fiber monofilaments in a form of hank or spool into an exhaust dyeing solution and being dyed for 10 to 120 minutes at the temperature of 60 to 105°C;
(2) fabric making: making natural fibers or artificial fibers to be a lining layer, making synthetic fiber multifilaments to be an outshell layer, and making polypropylene or polyethylene fiber monofilaments to be a lapping layer, wherein the lapping layer is situated between the lining layer and the outshell layer and both the lining layer and the outshell layer are made as a meshwork stitch with a density of 3.88 to 77.7 meshes per square centimeter (25 to 500 meshes per square inch);
(3) water rinsing and centrifuge drying;
(4) setting.

Particularly, in the above two methods for preparing the insect repellant fabric, the natural fibers for the lining layer can be selected from the group consisting of raw silk, cotton, hemp, bamboo, sheep wool, goat wool, camel hair, rabbit hair, yak hair, silkworm silk and tussah silk.

Especially, in the second method for preparing an insect repellant fabric, the lining layer may be made by artificial fibers selected from the group consisting of viscose fibre, acetate fibre and azelon.

The synthetic fiber multifilaments for the outshell layer may be selected from the group consisting of polyester, polyamide, polypropylene, polyethylene, polyacrylonitrile, polyvinyl chloride and polyurethane fiber multifilaments.

Preferably, the synthetic fiber multifilaments are polypropylene or polyethylene fiber multifilaments.

The polypropylene or polyethylene fiber monofilaments for the lapping layer preferably have a diameter of less than 0.12mm. If the diameter is more than 0.12mm, the bulky monofilaments will extend out of the lining layer or the outshell layer due to their unpliancy, therefore the extension part will contact with skin of persons who wear the fabric and make the persons feel roughness and stabbing pain, meanwhile, the medicaments on the surface of the monofilaments may irritate the skin.

The exhaust dyeing solution is an aqueous solution containing emulsifiable concentrate, wherein the emulsifiable concentrate is a mixture of pyrethroids and an alcohol-ether solvent in a mass ratio of 1:5 to 1:20; the mass ratio of the fabric to the exhaust dyeing solution is 1:7 to 1:20, and the amount of the emulsifiable concentrate is 5 to 10% based on the mass of the fabric.

The emulsifiable concentrate may be prepared by adding pyrethroids into an alcohol-ether solvent, being heated to 40 to 70°C and being agitated so as to dissolve the pyrethroids completely. Then, water is added into the prepared emulsifiable concentrate and agitating is performed uniformly to form the exhaust dyeing solution.

The alcohol-ether solvent in the exhaust dyeing solution can be one selected from the group consisting of ethylene glycol butyl ether, ethylene glycol methyl ether, ethylene glycol ethyl ether, ethylene glycol phenyl ether, diethylene glycol butyl ether, propylene glycol methyl ether, propylene glycol ethyl ether, propylene glycol butyl ether, ethylene glycol monoethyl ether acetate and ethylene glycol monoalkyl ether carboxylate, or a mixture thereof, wherein, ethylene glycol butyl ether is preferable.

Pyrethroids in the exhaust dyeing solution is a kind of broad spectrum pesticide, which can repel and kill various insects and their insecticidal ability is 10 to 100 times higher than conventional pesticides, such as organochlorines, organophosphorus and carbamates. The advantages of pyrethroids are small usage, low effective concentration, safe to human and animal, and slight pollution. Pyrethroids used in the present invention can be selected from deltamethrin, cyhalothrin, cypermethrin, D-trans-phenothrin and permethrin, preferably, from deltamethrin and cyhalothrin. In addition, when comparing the insecticidal activity, those of deltamethrin and cyhalothrin are higher than that of commonly used permethrins by one order of magnitude.

Especially, in the present invention, under the dyeing mechanism of dyes, pyrethroids are used as dyes without any color radical to dye the fabric of synthetic fibers or synthetic fiber yarns in an exhaust dyeing process.

During the dyeing and printing process, after being heated, the synthetic fibers swell as the temperature rises, therefore, the spaces among the molecular chain segments get broader and the structure of the fibers becomes loose, then pyrethroids having small molecular weight may come into the inside of the fibers. After the fabric is cooled down, pyrethroids are coagulated in the fibers. When using the above prepared fabric, pyrethroids will continually penetrate from the inside to the surface of the fibers so as to realize the insects repellant effects. Furthermore, pyrethroids used in the present invention should be hydrophobic, namely they are insoluble in water. In addition, the used pyrethroids should have a molecular weight of less than 700 and a decomposition temperature higher than the heat treatment temperature in exhaust dyeing or pad dyeing, and they should have polar groups in the molecules, such as -OH, -CN, -NH, -NHR, -NR₂, -NHCOR, -I, -Cl, -Br, -NO₂, and so on. Pyrethroids comprising more than one of the above mentioned polar groups may bond with fiber molecules by them.

After dyeing and printing, pyrethroids in the synthetic fibers may penetrate from interior to the surface of the fibers. When pyrethroids on the surface go away due to washing-up or other reasons, further pyrethroids in the fibers will move from the region having higher concentration to that having lower concentration gradually, and penetrate to the surface of the fibers after a period of time. Therefore, during the usage of the fabric, insects will be killed upon contacting with pyrethroids on the fibers, so that insects repellant effects are achieved. In order to improve the mobility of pyrethroids in fibers and achieve the optimal insect repellant effects, it is preferable to use synthetic fibers having lower glass transition temperature and broader intermolecular spaces.

Among the existing various synthetic fibers, physicochemical properties thereof are much different. Concretely, the glass transition temperatures thereof are ranged from the highest to the lowest as follows: polyacrylonitrile, polyvinyl chloride, polyester, polyamide, polyurethane, polypropylene and polyethylene. It can be seen that polypropylene and polyethylene have lower glass transition temperatures and broader intermolecular spaces, when compared with other synthetic fibers. Therefore, in the present invention, polypropylene or polyethylene fiber monofilaments are used for lapping layer, and for the synthetic fiber multifilaments of outshell layer, it is also preferable to use polypropylene or polyethylene fiber multifilaments.

Because pyrethroids are insoluble in water, they can not be directly used in dyeing and printing process. Therefore, it is necessary to find a solvent which will be used to form a stable exhaust dyeing solution of pyrethroids and water.

Since alcohol-ether solvent can not only be miscible with water, but also dissolve pyrethroids, it is used by the present inventors to formulate a pyrethroid solution through following steps: adding pyrethroids into an alcohol-ether solvent and completely dissolving them by heating and agitating to form an emulsifiable solution, then adding water therein, and agitating uniformly to prepare an emulsion of the pyrethroid without adding further emulsifiers.

Alcohol ether solvent has both a hydrophilic alcohol group and an oleophilic ether group. The oleophilic ether groups have the function of not only dissolving pyrethroid but also swelling the synthetic fibers after being heated, and can disperse carries when dyeing. In addition, by a mass of experiments and comparing numerous solvents, it is found that the alcohol-ether solvent does not dissolve polyethylene or polypropylene fibers at about 100°C, therefore distortion and breakage of fabric will not occur. Furthermore, the toxicity of alcohol-ether solvent is much lower than that of xylene.

In the first method of the present invention, if the natural fibers of the lining layer are dyed together with other synthetic fibers by exhaust dyeing solution containing pyrethroids, only the surface of the natural fibers can bind a little amount of pyrethroid, and the pyrethroids on the surface of the natural fibers will completely go away after being water rinsed. Thus, the lining layer of the insect repellant fabric prepared by the present method does not adsorb pyrethroids, and will not irritate skin of persons. On the contrary, if the lining layer made by synthetic fibers or artificial fibers is dyed by exhaust dyeing solution containing pyrethroids, the pyrethroids will permeate into the inside of the synthetic fibers or artificial fibers for lining layer, and the pyrethroids can not be removed even after being water rinsed for many times. Therefore, in the first method of the present invention, only natural fibers can be selected as the material for lining layer.

While in the second method of the present invention, only materials for lapping layer and outshell layer are treated by exhaust dyeing solution, material for lining layer does not undergo such process, therefore, it will not raise problems of irritating skin resulted from pyrethroids absorbed in the material for lining layer in the above mentioned first method. In other words, by using the second method of the present invention, both natural fibers and artificial fibers can be selected as the material for lining layer.

All the raw materials used in the present invention are commercially available, and all the processes and machines without description in details are those commonly used in the art.

The present invention also provides an insect repellant fabric achieved by following technical solutions.

An insect repellant fabric prepared by the first method, composed of a lining layer, an outshell layer and a lapping layer situated between the former two layers, wherein, the lining layer is made of natural fibers, the outshell layer is made of synthetic fiber multifilaments and the lapping layer is made of polypropylene or polyethylene fiber monofilaments, and both the lining layer and the outshell layer are made as a meshwork stitch with a density of 3.88 to 77.7 meshes per square centimeter (25 to 500 meshes per square inch).

Another insect repellant fabric prepared by the second method, composed of a lining layer, an outshell layer and a lapping layer situated between the former two layers, wherein, the lining layer is made of natural fibers or artificial fibers, the outshell layer is made of synthetic fiber multifilaments and the lapping layer is made of polypropylene or polyethylene fiber monofilaments, and both the lining layer and the outshell layer are made as a meshwork stitch with a density of 3.88 to 77.7 meshes per square centimeter (25 to 500 meshes per square inch).

Both the insect repellant fabric prepared by the first and second method have the structure composed of a lining layer, a lapping layer and an outshell layer in turn, wherein, the lapping layer is situated between the other two layers.

As for the material for the lining layer, comfortable material may be used, for example, natural fibers such as raw silk, cotton, hemp, bamboo, sheep wool, goat wool, camel hair, rabbit hair, yak hair, silkworm silk and tussah silk, and artificial fibers such as viscose fibre, acetate fibre and azelon.

As for the material for the outshell layer, synthetic fiber multifilaments such as polyester, polyamide, polypropylene, polyethylene, polyacrylonitrile, polyvinyl chloride and polyurethane fiber multifilaments may be used.

Both the lining layer and the outshell layer are made as a meshwork stitch with a density of 3.88 to 77.7 meshes per square centimeter (25 to 500 meshes per square inch).

The lapping layer made of polypropylene or polyethylene fiber monofilaments situates between the lining layer and the outshell layer and supports them. The arrangement of polypropylene or polyethylene fiber monofilaments may be irregular or regular, e.g. they may be in lines laterally, longitudinally or obliquely at a certain angle.

In the present invention, the unit for density of meshwork stitch is mesh per square inch, which represents the number of holes on the fabric per square inch, and testing standard for that is mesh size-physical counting ISO7211-2:1984.

The technical solutions of the present invention have advantages as follows:
1. the present preparing method has short processing flow, easy operation and high production efficiency; the dosage of pyrethroids is low, and no other emulsifiers are needed, therefore the cost is low; processing temperature is low, therefore most pyrethroids having low decomposition temperature can be utilized in the production; the content of pyrethroids on the fabric can be exactly controlled by using exhaust dyeing process, therefore, properties of resulted products are stable; and the exhaust dyeing solution can be cyclically used;
2. in the present invention, extrinsic pyrethroids are applied to the fabric in an exhaust dyeing process, therefore, there is no strict requirement for the property and quality of the fibers, even the recycled synthetic fibers can be used after re-spinning process, the cost thereof is low, and the resulted fabric has a good soft touch;
3. the insect repellant fabric prepared according to the present invention show good air permeability, strong defense function for insect invasion and permanent insect repellant effect.

### Detailed Description of the Invention

### Example 1

### 1. Raw materials

Materials for lining layer, i.e. back yarns 1 and 2, were 60/2 army green combed cotton fiber;
material for lapping layer, i.e. lapping yarn 3, was 33dTex/1 F polyethylene fiber monofilaments having a diameter of about 0.09 mm;
materials for outshell layer, i.e. front yarns 5 and 6, were 83dTex/144F army green low-stretch polyester fiber.

### 2. Warping

The used warper was DS21 warping machine purchased from Karl Mayer co., Germany, wherein, beam size was 53 centimetres (21 inches). Back yarns 1 and 2, lapping yarn 3, and front yarns 5 and 6 were corresponded to each beam having the same serial number respectively. The total yarn number on each of beams 1, 2, 5 and 6 was 230, on beam 3 was 460, and each of yarns 1, 2, 3, 5 and 6 used 4 beams. The running speed of the warping machine was 400 revolutions per minute.

### 3. Preparation of the emulsifiable solution

1 kg of deltamethrin was added into 10 kg of ethylene glycol butyl ether as solvent, the mixture was heated to 50°C and agitated till the deltamethrin was dissolved completely, then further agitated for 10 minutes to form the emulsifiable solution.

### 4. Preparation of the fabric

(1) In fabric making process, RD6/DPLM Double Needle Bar Warp Knitting Machine (22E, from Karl Mayer co., Germany) was used, and the width of the machine was 213 centimetres (84 inches), wherein, the arrangement of No. 1 guide bar chain links was 10122321, and the yarn was threaded as every other needle guide on the guide bar; the arrangement of No. 2 guide bar chain links was 23211012, and the yarn was threaded as every other needle guide on the guide bar; the arrangement of No. 3 guide bar chain links was 10101212, with full-set threading; the arrangement of No. 5 guide bar chain links was 23211012, and the yarn was threaded as every other needle guide on the guide bar; the arrangement of No. 6 guide bar chain links was 10122321, and the yarn was threaded as every other needle guide on the guide bar. The machine density was 11 courses per centimeter, and the running speed of the machine was 350 revolutions per minute.
   On the Double Needle Bar Warp Knitting Machine, back yarns, lapping yarns and front yarns were knitted into a fabric, in which the lining layer was made of 60/2 combed cotton fiber, the outshell layer was made of 83dTex/144F polyester fiber and the lapping layer was made of 33dTex/1 F polyethylene fiber monofilaments, wherein, both the lining layer and the outshell layer were knitted as a meshwork stitch with a density of 11.2 meshes per square centimetres (72 meshes per square inch).
(2) The prepared fabric was dipped and dyed in an exhaust dyeing solution at a temperature raising at the rate of 2°C/min up to 105°C and then kept for 20 minutes; the used exhaust dyeing solution is an aqueous emulsifiable solution, the mass ratio of fabric to the exhaust dyeing solution was 1:15, and the amount of the emulsifiable solution was 8% based on the mass of the fabric.
(3) The fabric was water rinsed and dried in a centrifuge.
(4) The fabric was set at 100 °C for 2 minutes.

No pyrethroid was dyed into the lining layer during the exhaust dyeing process due to the property of natural fibers, but a little pyrethroid would inevitably be adhered to the surface of fibers for the lining layer after pad dyeing. Pyrethroids adhered on the surface of fibers for the lining layer could be removed by water rinsing, thus such prepared fabric was much safer in use.

In the insect repellant fabric prepared by using the above method, both the lining layer and the outshell layer were knitted as a meshwork stitch with a density of 11.2 meshes per square centimeter (72 meshes per square inch) and it had a good air permeability.

Both the lining layer and lapping layer were dyed in the exhaust dyeing solution containing deltamethrin, therefore, the defense function for insect invasion was excellent. The insect repellant in the fibers would continually penetrate from the interior to the surface, therefore, the insect repellant effect was permanent. On the contrary, if the conventional insect repellant coating process was used, to the fabric knitted as the present meshwork stitch in two layers, it is impossible to have a single meshwork layer and the middle lapping layer of the fabric insect repellant coated as the present invention.

### Example 2

### 1. Raw materials

Materials for lining layer, i.e. back yarns 1 and 2, were 83dTex/18F army green rayon fiber;
material for lapping layer, i.e. lapping yarn 3, was 20D polypropylene fiber monofilaments;
materials for outshell layer, i.e. front yarns 5 and 6, were 150D144F army green polyester filaments.

### 2. Preparation of the emulsifiable solution

1 kg of cyhalothrin was added into 5 kg of ethylene glycol butyl ether as solvent, and the mixture was heated to 50 °C and agitated till the cyhalothrin dissolved completely, then further agitated for 10 minutes to form the emulsifiable solution.

### 3. Exhaust dyeing

The lapping yarn 3, and the front yarns 5 and 6 in a form of hank or spool were dipped and dyed in an exhaust dyeing solution of which the temperature was raised to 60 °C at the rate of 1.5°C /min and then kept for 40 minutes; the mass ratio of fabric to the exhaust dyeing solution was adjusted to 1:20, and the amount of the emulsifiable solution was 10 % based on the mass of the yarn.

### 4. Warping

The used warper was DS21 warping machine purchased from Karl Mayer co., Germany, wherein, the beam size was 21 inches. Back yarns 1 and 2, lapping yarn 3, and front yarns 5 and 6 were corresponded to each beam having the same serial number respectively. The total yarn number on each of beams 1, 2, 5 and 6 was 230, on beam 3 was 460, and each of yarns 1, 2, 3, 5 and 6 used 4 beams. The running speed of the warping machine was 1000 revolutions per minute.

### 5. Preparation of the fabric

(1) In fabric making process, RD6/DPLM Double Needle Bar Knitting Warp Machine (22E, from Karl Mayer Co., Germany) was used, and the width of the machine was 84 inches, wherein, the arrangement of No. 1 guide bar chain links was 10122321, and the yarns were threaded as every other needle guide on the guide bar; the arrangement of No. 2 guide bar chain links was 23211012, and the yarns were threaded as every other needle guide on the guide bar; the arrangement of No. 3 guide bar chain links was 10101212, with full-set threading; the arrangement of No. 5 guide bar chain links was 23211012, and the yarns were threaded as every other needle guide on the guide bar; the arrangement of No. 6 guide bar chain links was 10122321, and the yarns were threaded as every other needle guide on the guide bar. The machine density was 11 courses per centimeter, and the running speed of the machine was 400 revolutions per minute.
   On the Double Needle Bar Warp Knitting Machine, back yarns, lapping yarns and front yarns were knitted into a fabric, in which the lining layer was made of 83dTex/18F army green rayon fiber, the outshell layer was made of 150D144F polyester filaments and the lapping layer was made of 20D polypropylene fiber monofilaments, wherein, both the lining layer and the outshell layer were knitted as a meshwork stitch with a density of 25 meshes per square inch.
(2) The fabric was water rinsed and dried in a centrifuge.
(3) The fabric was set at 95 °C for 2 minutes.

### Example 3

### 1. Raw materials

Materials for lining layer, i.e. back yarns 1 and 2, were 60/2 army green combed cotton fiber;
material for lapping layer, i.e. lapping yarn 3, was 20D polypropylene fiber monofilaments;
materials for outshell layer, i.e. front yarns 5 and 6, were 100D48F army green acrylic fibre (polyacrylonitrile) filaments.

### 2. Warping

The used warper was DS21 warping machine purchased from Karl Mayer co., Germany, wherein, beam size was 21 inches. Back yarns 1 and 2, lapping yarn 3, and front yarns 5 and 6 were corresponded to each beam having the same serial number respectively. The total yarn number on each of beams 1, 2, 5 and 6 was 230, on beam 3 was 460, and each of yarns 1, 2, 3, 5 and 6 used 4 beams. The running speed of the warping machine was 400 revolutions per minute.

### 3. Preparation of the emulsifiable solution

1 kg of deltamethrin was added into 20 kg of propylene glycol methyl ether as solvent, the mixture was heated to 55 °C and agitated till the deltamethrin dissolved completely, then further agitated for 10 minutes to form the emulsifiable solution.

### 4. Preparation of the fabric

(1) In fabric making process, RD6/DPLM Double Needle Bar Warp Knitting Machine (22E, from Karl Mayer co., Germany) was used, and the width of the machine was 213 centimetres (84 inches), wherein, the arrangement of No. 1 guide bar chain links was 10122321, and the yarns were threaded as every other needle guide on the guide bar; the arrangement of No. 2 guide bar chain links was 23211012, and the yarns were threaded as every other needle guide on the guide bar; the arrangement of No. 3 guide bar chain links was 10101212, with full-set threading; the arrangement of No. 5 guide bar chain links was 23211012, and the yarns were threaded as every other needle guide on the guide bar; the arrangement of No. 6 guide bar chain links was 10122321, and the yarns were threaded as every other needle guide on the guide bar. The on-machine density was 11 courses per centimeter, and the running speed of the machine was 350 revolutions per minute.
   On the Double Needle Bar Warp Knitting Machine, back yarns, lapping yarns and front yarns were knitted into a fabric, in which the lining layer was made of 60/2 combed cotton fiber, the outshell layer was made of 100D48F acrylic fibre (polyacrylonitrile) filaments and the lapping layer was made of 20D polypropylene fiber monofilaments, wherein, both the lining layer and the outshell layer were knitted as a meshwork stitch with a density of 31 meshes per square centimetres (200 meshes per square inch).
(2) The prepared fabric was dipped and dyed in an exhaust dyeing solution of which the temperature was raised to 100°C at the rate of 2.5°C /min and then kept for 50 minutes; the mass ratio of fabric to the exhaust dyeing solution was adjusted to 1:7, and the amount of the emulsifiable solution was 5% based on the mass of the fabric.
(3) The fabric was water sensed and dried in a centrifuge.
(4) The fabric was set at 100 °C for 2.5 minutes.

When the above exhaust dyeing solution was reused, the newly added emulsifiable solution was less than routine dosage by 1 to 2% according to the test results on the fabric.

### Example 4

### Biological tests for insect repellant effects of fabric

The fabric prepared in examples 1, 2 and 3 were tested for insects repellant effects before and after being washed for 20 times, according to the standard of WHO/CDS/WHOPES/GCDPP/2005.11, expect that the soap made in Gambia of Africa was replaced with Omo soap made in China whose washing power and detergency are more effective than that of the former. Mosquitoes were kept to contact with the fabric for 3 minutes and then were fed with sugar water, and the conditions of them were observed for 24 hours.

**Table 1 : results of testing for insect repellant effects of fabric**

| | Without being washed | | After being washed for 20 times | |
|---|---|---|---|---|
| | Knock down rate | mortality | Knock down rate | mortality |
| Fabric in example 1 | 96.78% | 100% | 83.30% | 96.78% |
| Fabric in example 2 | 93.21% | 100% | 78.26% | 88.41% |
| Fabric in example 3 | 94.52% | 100% | 75.44% | 84.21% |

As can be seen from the data in table 1, the present fabric had an excellent insect repellant effect, wherein the knock down rate of mosquitoes is more than 93% before the fabric were washed, while it is more than 75% after the fabric were washed for 20 times. As for the mortality of mosquitoes, it is 100% before the fabric were washed and more than 84% after the fabric were washed for 20 times.

### Example 5

The content of pyrethroids in fabric was tested before and after being washed for 20 times, according to the standard of Deltamethrin-WHO/SIT/24.R2-1999.

Washing method was according to WHO/CDS/WHOPES/GCDPP/2005.11, except that the soap made in Gambia of Africa was replaced with Omo soap made in China whose washing power and detergency are more effective than that of the former.

**Table 2: the content of pyrethroids in fabric before and after being washed for 20 times**

| | Without being washed | After being washed for 20 times |
|---|---|---|
| | Content of pyrethroids in lapping layer(mg/m²) | Content of pyrethroids in lapping layer(mg/m²) |
| Fabric in example 1 | 593.28 | 488.42 |
| Fabric in example 2 | 498.36 | 295.16 |
| Fabric in example 3 | 486.54 | 278.86 |

As can be seen from the data in table 2, the content of pyrethroids in lapping layer of the present fabric was much higher than that stipulated in WHO/CTD/WHOPES/97.2 after being washed for 20 times, which proved that the present fabric had a strong adhesive force with pyrethroids, therefore had a high washing fastness.

### Example 6

### Regeneration of insect repellant effect

According to Deltamethrin-WHO/SIT/24.R2-1999, the fabric were washed by the solvent, and then kept in an oven at 70°C for 120min, the amount of the released pyrethroids from the fabric met the insect repellant standard stipulated by WHO.

**Table 3: data sheet showing regeneration of the insect repellant effect**

| | Without being washed | After being washed by solvent for one time |
|---|---|---|
| | Content of pyrethroids in lapping layer(mg/m²) | Content of pyrethroids in lapping layer(mg/m²) |
| Fabric in example 1 | 593.28 | 45.49 |
| Fabric in example 2 | 498.36 | 38.76 |
| Fabric in example 3 | 486.54 | 39.42 |

As can be seen from data in table 3, the pyrethroids on the fabric surface were removed completely after the fabric were washed by standard solvent, and the lapping layer showed a strong capacity of releasing pyrethroids, more than 38 mg/m², after the washed fabric were kept in an oven at 70 °C for 120 minutes.

### Example 7

### Tests for air permeability of fabric

The air permeability was tested according to standard of GB/T 5453-1997(100Pa).

**Table 4: data on air permeability of various fabric**

| | The content of permeability(mm/s) |
|---|---|
| Military uniform fabric | 7.5 |
| Lace fabric | 5977.4 |
| Mosquito-curtain fabric | 7404.5 |
| Fabric in example 1 | 5848.3 |
| Fabric in example 2 | 6543.2 |
| Fabric in example 3 | 4058.6 |

As can be seen from data in table 4, the air permeability of fabric prepared according to present invention was much higher than that of generic military uniform fabric and similar with that of lace fabric.

In July and August in Altay district of Xinjiang municipality, persons who wore mosquito repellant suits made by the present fabric were overall protected and felt comfortable and well ventilated, although the density of the mosquito (including biting midge and sandfly) is up to 1700 per cubic meter.

## Claims

1. A method for preparing an insect repellant fabric, **characterized in that** the method comprises the following steps:
(1) fabric making: making natural fiber into a lining layer, making synthetic fiber multifilaments into an outshell layer, and making polypropylene or polyethylene fiber monofilaments into a lapping layer, wherein, the lapping layer is situated between the lining layer and the outshell layer, and both the lining layer and the outshell layer are made as a meshwork stitch with a density of 3.88 to 77.7 meshes per square centimetre (25 to 500 meshes per square inch);
(2) exhaust dyeing: dipping the prepared fabric into an exhaust dyeing solution and being dyed for 10 to 120 minutes at a temperature of 60 to 105°C;
(3) water rinsing and centrifuge drying;
(4) setting;
wherein, in step (2), the exhaust dyeing solution is an aqueous solution containing emulsifiable concentrate, and the emulsifiable concentrate is a mixture of pyrethroid and alcohol-ether solvent in a mass ratio of 1:5 to 1:20; the mass ratio of the fabric to the exhaust dyeing solution is 1:7 to 1:20, and the amount of the emulsifiable concentrate is 5 to 10% based on the mass of the fabric.

2. The method for preparing the insect repellant fabric according to claim 1, **characterized in that** the alcohol-ether solvent is one selected from the group consisting of ethylene glycol butyl ether, ethylene glycol methyl ether, ethylene glycol ethyl ether, ethylene glycol phenyl ether, diethylene glycol butyl ether, propylene glycol methyl ether, propylene glycol ethyl ether, propylene glycol butyl ether, ethylene glycol monoethyl ether acetate and ethylene glycol monoalkyl ether carboxylate, or a mixture thereof.

3. The method for preparing the insect repellant fabric according to claim 1, **characterized in that** the pyrethroid contained in the exhaust dyeing solution is one selected from the group consisting of deltamethrin, cyhalothrin, cypermethrin, D-trans-phenothrin and permethrin, or a mixture thereof.

4. The method for preparing the insect repellant fabric according to claim 3, **characterized in that** the pyrethroid contained in the exhaust dyeing solution is deltamethrin or cyhalothrin.

5. A method for preparing an insect repellant fabric, **characterized in that** the method comprises the following steps:
(1) exhaust dyeing: dipping synthetic fiber multifilaments, polypropylene or polyethylene fiber monofilaments into an exhaust dyeing solution in a form of hank or spool and being dyed for 10 to 120 minutes at a temperature of 60 to 105°C;
(2) making a fabric: making natural fiber or artificial fiber into a lining layer, making synthetic fiber multifilaments into an outshell layer, and making polypropylene or polyethylene fiber monofilaments into a lapping layer, wherein, the lapping layer is situated between the lining layer and the outshell layer, and both the lining layer and the outshell layer are made as a meshwork stitch with a density of 3.88 to 77.7 meshes per square centimetre (25 to 500 meshes per square inch);
(3) water rinsing and centrifuge drying;
(4) setting;
wherein, in step (1), the exhaust dyeing solution is an aqueous solution containing emulsifiable concentrate, and the emulsifiable concentrate is a mixture of pyrethroid and alcohol-ether solvent in a mass ratio of 1:5 to 1:20; the mass ratio of the fiber filaments to the exhaust dyeing solution is 1:7 to 1:20, and the amount of the emulsifiable concentrate is 5 to 10% based on the mass of the fiber filaments.

6. The method for preparing the insect repellant fabric according to claim 5, **characterized in that** the alcohol-ether solvent is one selected from the group consisting of ethylene glycol butyl ether, ethylene glycol methyl ether, ethylene glycol ethyl ether, ethylene glycol phenyl ether, diethylene glycol butyl ether, propylene glycol methyl ether, propylene glycol ethyl ether, propylene glycol butyl ether, ethylene glycol monoethyl ether acetate and ethylene glycol monoalkyl ether carboxylate, or a mixture thereof.

7. The method for preparing the insect repellant fabric according to claim 5, **characterized in that** the pyrethroid contained in the exhaust dyeing solution is one selected from the group consisting of deltamethrin, cyhalothrin, cypermethrin, D-trans-phenothrin and permethrin, or a mixture thereof.

8. The method for preparing the insect repellant fabric according to claim 7, **characterized in that** the pyrethroid contained in the exhaust dyeing solution is deltamethrin or cyhalothrin.

9. An insect repellant fabric, **characterized in that** the insect repellant fabric is composed of a lining layer, an outshell layer and a lapping layer situated between the lining layer and the outshell layer, wherein, the lining layer is made of natural fiber, the outshell layer is made of synthetic fiber, and the lapping layer is made of polypropylene or polyethylene fiber monofilament; both the lining layer and the outshell layer are made as a meshwork stitch with a density of 3.88 to 77.7 meshes per square centimetre (25 to 500 meshes per square inch), and the insect repellant fabric is prepared by using the method according to any one of claims 1 to 4.

10. An insect repellant fabric, **characterized in that** the insect repellant fabric is composed of a lining layer, an outshell layer and a lapping layer situated between the lining layer and the outshell layer, wherein, the lining layer is made of natural fiber or artificial fiber, the outshell layer is made of synthetic fiber multifilament, and the lapping layer is made of polypropylene or polyethylene fiber monofilament; both the lining layer and the outshell layer are made as a meshwork stitch with a density of 3.88 to 77.7 meshes per square centimetre (25 to 500 meshes per square inch), and the insect repellant fabric is prepared by using the method according to any one of claims 5 to 8.

## Patentansprüche

1. Verfahren zur Herstellung eines insektenabwehrenden Gewebes, **dadurch gekennzeichnet, dass** das Verfahren die folgenden Schritte umfasst:
(1) Herstellung des Gewebes: Gestalten natürlicher Fasern zu einer Auskleidungs- bzw. Futterschicht, Gestalten synthetischer Fasermultifilamente zu einer Obermaterialschicht und Gestalten von Propylen- oder Polyethylen-fasermonofilamente zu einer eine Überlappungsschicht, wobei die Überlappungsschicht zwischen der Futterschicht und der Obermaterialschicht angeordnet ist, und sowohl die Futterschicht als auch die Obermaterialschicht als ein Maschenwerk (meshwork stitch) mit einer Dichte von 3,88 bis 77,7 Maschen je cm² (25-500 Maschen je Quadratinch) hergestellt sind;
(2) Ausziehfärben: Eintauchen des hergestellten Gewebes in eine Ausziehfärbelösung und Färben für 10 bis 120 Minuten bei einer Temperatur von 60 bis 105 °C;
(3) Wasserspülen und Zentrifugaltrocknen;
(4) Setzen;
wobei in Schritt (2) die Ausziehfärbelösung eine wässrige Lösung ist, enthaltend ein emulgierbares Konzentrat, und das emulgierbare Konzentrat eine Mischung aus Pyrenthroid und Alkohol-Ether-Lösungsmittel in einem Masseverhältnis von 1:5 bis 1:20 ist; das Masseverhältnis des Gewebes zu der Ausziehfärbelösung 1:7 bis 1:20 beträgt und die Menge des emulgierbaren Konzentrats 5-10% bezogen auf die Masse des Gewebes beträgt.

2. Verfahren zur Herstellung eines insektenabwehrenden Gewebes gemäß Anspruch 1, **dadurch gekennzeichnet, dass** das Alkohol-Ether-Lösungsmittel eines ist, gewählt aus der Gruppe bestehend aus Ethylenglycolbutylether, Ethylenglycolmethylether, Ethylenglycolethylether, Ethylenglycolphenylether, Diethylenglycolbutylether, Propylenglycolmethylether, Propylenglycolethylether, Propylenglycolbutylether, Ethylenglycolmonoethyletheracetat und Ethylenglycolmonoalkylethercarboxylat oder eine Mischung dieser.

3. Verfahren zur Herstellung eines insektenabwehrenden Gewebes nach Anspruch 1, **dadurch gekennzeichnet, dass** das Pyrenthroid, welches in der Ausziehfärbelösung enthalten ist, eines ist, gewählt aus der Gruppe bestehend aus Deltamethrin, Cyhalotrhrin, Cypermethrin, D-trans-Phenothrin und Permethrin, oder eine Mischung dieser.

4. Verfahren zur Herstellung eines insektenabwehrenden Gewebes nach Anspruch 3, **dadurch gekennzeichnet, dass** das in der Ausziehfärbelösung enthaltene Pyrethroid Deltamethrin oder Cyhalothrin ist.

5. Verfahren zur Herstellung eines insektenabwehrenden Gewebes, **dadurch gekennzeichnet, dass** das Verfahren die folgenden Schritte umfasst:
(1) Ausziehfärben: Eintauchen synthetischer Fasermultifilamente, Polypropylen- oder Polyethylen-fasermonofilamente in eine Ausziehfärbelösung in Form eines Stranges oder einer Spule und Färben für 10-120 Minuten bei einer Temperatur von 60 bis 105 °C;
(2) Herstellung des Gewebes: Gestalten natürlicher Fasern zu einer Futterschicht, Gestalten synthetischer Fasermultifilamente zu einer Obermaterialschicht und Gestalten von Propylen- oder Polyethylen-fasermonofilamente zu einer Überlappungsschicht, wobei die Überlappungsschicht zwischen der Futterschicht und der Obermaterialschicht angeordnet ist, und sowohl die Futterschicht als auch die Obermaterialschicht als ein Maschenwerk (meshwork stitch) mit einer Dichte von 3,88 bis 77,7 Maschen je cm² (25-500 Maschen je Quadratinch) hergestellt sind;
(3) Wasserspülen und Zentrifugaltrocknen;
(4) Setzen;
wobei in Schritt (2) die Ausziehfärbelösung eine wässrige Lösung ist, enthaltend ein emulgierbares Konzentrat, und das emulgierbare Konzentrat eine Mischung aus Pyrenthroid und Alkohol-Ether-Lösungsmittel in einem Masseverhältnis von 1:5 bis 1:20 ist; das Masseverhältnis des Gewebes zu der Ausziehfärbelösung 1:7 bis 1:20 beträgt und die Menge des emulgierbaren Konzentrats 5-10% bezogen auf die Masse des Gewebes beträgt.

6. Verfahren zur Herstellung eines insektenabwehrenden Gewebes gemäß Anspruch 5, **dadurch gekennzeichnet, dass** das Alkohol-Ether-Lösungsmittel eines ist, gewählt aus der Gruppe bestehend aus Ethylenglycolbutylether, Ethylenglycolmethylether, Ethylenglycolethylether, Ethylenglycolphenylether, Diethylenglycolbutylether, Propylenglycolmethylether, Propylenglycolethylether, Propylenglycolbutylether, Ethylenglycolmonoethyletheracetat und Ethylenglycolmonoalkylethercarboxylat oder eine Mischung dieser.

7. Verfahren zur Herstellung eines insektenabwehrenden Gewebes nach Anspruch 5, **dadurch gekennzeichnet, dass** das Pyrenthroid, welches in der Ausziehfärbelösung enthalten ist, eines ist, gewählt aus der Gruppe bestehend aus Deltamethrin, Cyhalotrhrin, Cypermethrin, d-trans-Phenothrin und Permethrin, oder eine Mischung dieser.

8. Verfahren zur Herstellung eines insektenabwehrenden Gewebes nach Anspruch 7, **dadurch gekennzeichnet, dass** das in der Ausziehfärbelösung enthaltene Pyrethroid Deltamethrin oder Cyhalothrin ist.

9. Insektenabwehrendes Gewebe, **dadurch gekennzeichnet, dass** das insektenabwehrende Gewebe aus einer Futterschicht, einer Obermaterialschicht und einer Überlappungsschicht besteht, welche zwischen der Futterschicht und der Obermaterialschicht angeordnet ist, wobei die Futterschicht aus natürlicher Faser hergestellt ist, die Obermaterialschicht aus synthetischer Faser und die Überlappungsschicht aus Polypropylen- oder Polyethylenfasermonofilament hergestellt ist; sowohl die Futterschicht als auch die Obermaterialschicht als ein Maschenwerk mit einer Dichte von 3,88-77,7 Maschen je cm² (25-500 Maschen je Quadratinch) hergestellt ist und das insektenabwehrende Gewebe unter Verwendung des Verfahrens gemäß einem der Ansprüche 1 bis 4 hergestellt ist.

10. Insektenabwehrendes Gewebe, **dadurch gekennzeichnet, dass** das insektenabwehrende Gewebe aus einer Futterschicht, einer Obermaterialschicht und einer Überlappungsschicht besteht, welche zwischen der Futterschicht und der Obermaterialschicht angeordnet ist, wobei die Futterschicht aus natürlicher Faser hergestellt ist, die Obermaterialschicht aus synthetischer Faser und die Überlappungsschicht aus Polypropylen- oder Polyethylenfasermonofilament hergestellt ist; sowohl die Futterschicht als auch die Obermaterialschicht als ein Maschenwerk mit einer Dichte von 3,88-77,7 Maschen je cm² (25-500 Maschen je Quadratinch) hergestellt ist und das insektenabwehrende unter Verwendung des Verfahrens gemäß einem der Ansprüche 5 bis 8 Gewebe hergestellt ist.

## Revendications

1. Procédé de préparation d'une étoffe insectifuge, **caractérisé en ce que** le procédé comprend les étapes suivantes :
(1) fabrication d'étoffe fabrication de fibre naturelle en une couche de doublure, fabrication de multifilaments de fibre synthétique en une couche extérieure, et fabrication de monofilaments de fibre de poly(propylène) ou de poly(éthylène) en une couche de chevauchement, dans lequel, la couche de chevauchement est située entre la couche de doublure et la couche extérieure, et à la fois la couche de doublure et la couche extérieure sont fabriquées comme un point de maille ayant une densité de 3,88 à 77,7 mailles par centimètre carré (25 à 500 mailles par pouce carré) ;
(2) teinture par épuisement : immersion de l'étoffe préparée dans une solution de teinture par épuisement et teinture pendant 10 à 120 minutes à une température de 60 à 105 °C ;
(3) rinçage à l'eau et séchage par centrifugation ;
(4) fixage ;
dans lequel, dans l'étape (2), la solution de teinture par épuisement est une solution aqueuse contenant un concentré émulsifiable, et le concentré émulsifiable est un mélange de pyréthroïde et de solvant d'alcool-éther dans un rapport en masse de 1:5 à 1:20 ; le rapport en masse entre l'étoffe et la solution de teinture par épuisement étant de 1:7 à 1:20, et la quantité du concentré émulsifiable étant de 5 à 10 % par rapport à la masse de l'étoffe.

2. Procédé de préparation de l'étoffe insectifuge selon la revendication 1,
**caractérisé en ce que** le solvant d'alcool-éther est l'un choisi dans le groupe consistant en l'éther butylique d'éthylène glycol, l'éther méthylique d'éthylène glycol, l'éther éthylique d'éthylène glycol, l'éther phénylique d'éthylène glycol, l'éther butylique de diéthylène glycol, l'éther méthylique de propylène glycol, l'éther éthylique de propylène glycol, l'éther butylique de propylène glycol, l'acétate d'éther monoéthylique d'éthylène glycol et le carboxylate d'éther monoalkylique d'éthylène glycol, ou un mélange de ceux-ci.

3. Procédé de préparation de l'étoffe insectifuge selon la revendication 1,
**caractérisé en ce que** le pyréthroïde contenu dans la solution de teinture par épuisement est l'un choisi dans le groupe consistant en la deltaméthrine, la cyhalothrine, la cyperméthrine, la D-trans-phénothrine et la perméthrine, ou un mélange de celles-ci.

4. Procédé de préparation de l'étoffe insectifuge selon la revendication 3,
**caractérisé en ce que** le pyréthroïde contenu dans la solution de teinture par épuisement est la deltaméthrine ou la cyhalothrine.

5. Procédé de préparation d'une étoffe insectifuge, **caractérisé en ce que** le procédé comprend les étapes suivantes :
(1) teinture par épuisement : immersion de multifilaments de fibre synthétique, de monofilaments de fibre de propylène ou poly(éthylène) dans une solution de teinture par épuisement sous la forme d'un écheveau ou d'une fusette et étant teints pendant 10 à 120 minutes à une température de 60 à 105 °C ;
(2) fabrication d'une étoffe : fabrication de fibre naturelle ou de fibre artificielle en une fibre de doublure, fabrication de filament de fibre synthétique en une couche extérieure, et fabrication de monofilaments de fibre de poly(propylène) ou poly(éthylène) en une couche de chevauchement, dans laquelle, la couche de chevauchement est située entre la couche de doublure et la couche extérieure, et à la fois la couche de doublure et la couche extérieure sont fabriquées comme un point de maille ayant une densité de 3,88 à 77,7 mailles par centimètre carré (25 à 500 mailles par pouce carré) ;
(3) rinçage à l'eau et séchage par centrifugation ;
(4) fixage ;
dans lequel, dans l'étape (1), la solution de teinture par épuisement est une solution aqueuse contenant un concentré émulsifiable, et le concentré émulsifiable est un mélange de pyréthroïde et de solvant d'alcool-éther dans un rapport en masse de 1:5 à 1:20 ; le rapport en masse entre les filaments de fibre et la solution de teinture par épuisement étant de 1:7 à 1:20, et la quantité de concentré émulsifiable étant de 5 à 10 % par rapport à la masse des filaments de fibre.

6. Procédé de préparation de l'étoffe insectifuge selon la revendication 5,
**caractérisé en ce que** le solvant d'alcool-éther est l'un choisi dans le groupe consistant en l'éther butylique d'éthylène glycol, l'éther méthylique d'éthylène glycol, l'éther éthylique d'éthylène glycol, l'éther phénylique d'éthylène glycol, l'éther butylique de diéthylène glycol, l'éther méthylique de propylène glycol, l'éther éthylique de propylène glycol, l'éther butylique de propylène glycol, l'acétate d'éther monoéthylique d'éthylène glycol et le carboxylate d'éther monoalkylique d'éthylène glycol, ou un mélange de ceux-ci.

7. Procédé de préparation de l'étoffe insectifuge selon la revendication 5, **caractérisé en ce que** le pyréthroïde contenu dans la solution de teinture par épuisement est l'un choisi dans le groupe consistant en la deltaméthrine, la cyhalothrine, la cyperméthrine, la D-trans-phénothrine et la perméthrine, ou un mélange de celles-ci.

8. Procédé de préparation de l'étoffe insectifuge selon la revendication 7, **caractérisé en ce que** le pyréthroïde contenu dans la solution de teinture par épuisement est la deltaméthrine ou la cyhalothrine.

9. Etoffe insectifuge, **caractérisée en ce que** l'étoffe insectifuge est composée d'une couche de doublure, d'une couche extérieure et d'une couche de chevauchement située entre la couche de doublure et la couche extérieure, dans laquelle, la couche de doublure est constituée de fibre naturelle, la couche extérieure est constituée de fibre synthétique, et la couche de chevauchement est constituée d'un monofilament de fibre de propylène ou de poly(éthylène) ; à la fois la couche de doublure et la couche extérieure sont fabriquées comme un point de maille ayant une densité de 3,88 à 77,7 mailles par centimètre carré (25 à 500 mailles par pouce carré), et l'étoffe insectifuge est préparée en utilisant le procédé selon l'une quelconque des revendications 1 à 4.

10. Etoffe insectifuge, **caractérisée en ce que** l'étoffe insectifuge est composée d'une couche de doublure, d'une couche extérieure et d'une couche de chevauchement située entre la couche de doublure et la couche extérieure, dans laquelle, la couche de doublure est constituée de fibre naturelle ou de fibre artificielle ; la couche extérieure est constituée d'un multifilament de fibre synthétique, et la couche de chevauchement est constituée d'un monofilament de fibre de poly(propylène) ou poly(éthylène) ; à la fois la couche de doublure et la couche extérieure sont constituées comme un point de maille ayant une densité de 3,88 à 77,7 mailles par centimètre carré (25 à 500 mailles par pouce carré), et l'étoffe insectifuge est préparée en utilisant le procédé selon l'une quelconque des revendications 5 à 8.
